# EUROPEAN PATENT APPLICATION

(11) **EP 1 083 540 A2**
(43) Date of publication of application: **14.03.2001**
(21) Application number: 00119586.6
(22) Date of filing: 07.09.2000
(51) Int. Cl.: G09G 3/36

(54) **Liquid crystal display device**

(30) Priority: 10.09.1999 JP 25669399
(71) Applicant: NEC CORPORATION, Tokyo (JP)
(72) Inventor: Matsukuma, Hiroshi c/o NEC IC Microcomp.Syst,Ltd., Kawasaki-shi Kanagawa (JP)
(74) Representative: Glawe, Delfs, Moll & Partner

(57) **Abstract**

A display control circuit (8) outputs a non-display control signal as a high level signal when each pixel is in a non-display state. An OR circuit (51,21) is input said non-display control signal and a output signal of the display timing control circuit (50,20) and outputs a high level signal regardless of the output signal of a display timing control circuit (8) when the non-display control signal is in a high level. Meanwhile, a segment power supply selector (1) and a common power supply selector (4) output GND as a low potential side power supply when the non-display control signal in a high. A segment driver (3) and a common driver (6) output the low potential side power supply among the output potential of the segment power supply selector (1) or the common power supply selector (4) when the output signal of the OR circuit (21,51) is in a high level. Thus, the potential output to each pixel from the segment driver (3) and the common driver (6) when the pixel is in a non-display state is always GND.

## Description

The present invention relates to a liquid crystal display device capable of operating with reduced power consumption.

One important point in developing a low power consumption microcomputer is to stop the operation of circuits not required for the moment or lower the operation frequency as much as possible.

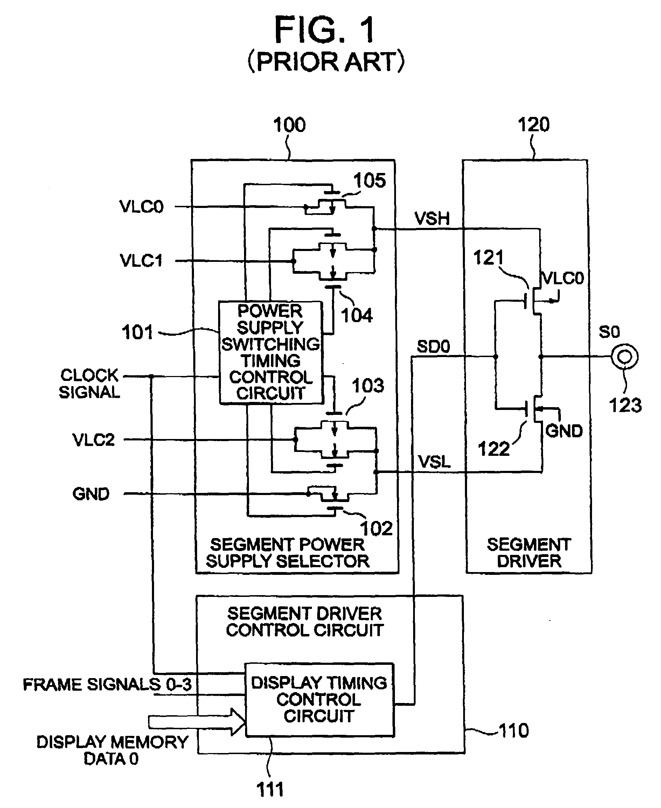

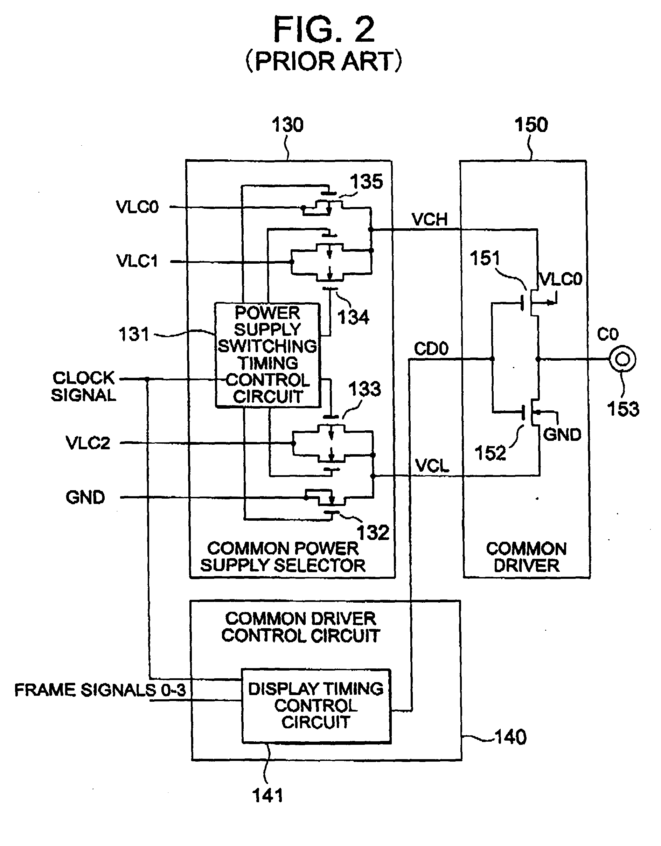

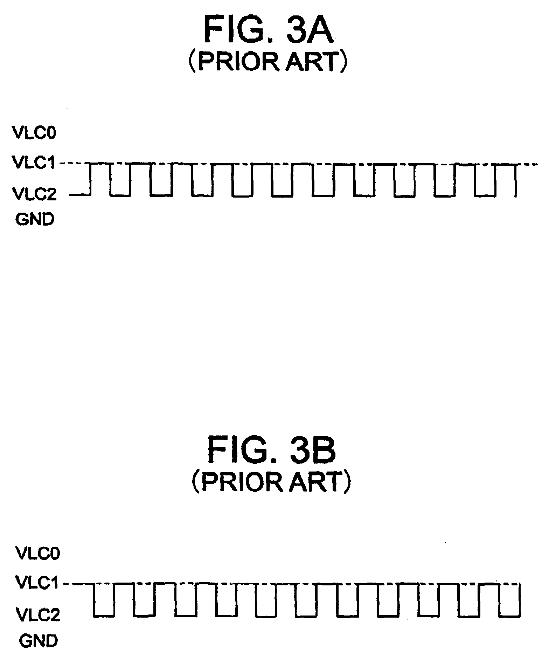

Fig. 1 is a block diagram of a segment driver circuit in a conventional liquid crystal display device. Fig. 2 is a block diagram of a common driver circuit in the conventional liquid crystal display device. Fig. 3A is a schematic waveform chart showing a segment waveform in a non-display state in the conventional liquid crystal display device, in which the ordinate represents potential, and the abscissa represents time. Fig. 3B is a schematic waveform chart showing a common waveform in a non-display state in the conventional liquid crystal display device, in which the ordinate represents potential and the abscissa represents time.

As shown in Fig. 1, the segment driver circuit used in the conventional liquid crystal display device includes a segment power supply selector 100, a segment driver control circuit 110, and a segment driver 120. The segment power supply selector 100 has a power supply switching timing control circuit 101, to which switches a102, b103, c104 and d105 are connected. The switch a102 is connected with a ground potential GND, and switches b103, c104 and d105 are provided with power supplies VLC2, VLC1, and VLC0, respectively. The power supply switching timing control circuit 101 is provided with a clock signal to switch between switches c104 and d105 and selectively output VLC0 or VLC1 as a high potential side power supply VSH. Meanwhile, the control circuit 101 switches between the switches a102 and b103 to selectively output VLC2 or GND as a low potential side power supply VSL.

The segment driver control circuit 110 has a display timing control circuit 111 to which frame signals 0 to 3 and display memory data 0 are input, and the display timing control circuit 111 outputs a segment driver gate signal SD0.

The segment driver 120 of a CMOS type has a p channel output buffer 121 and an n channel output buffer 122. The p channel output buffer 121 is provided with the high potential side power supply VSH as an input, while the n channel output buffer 122 is provided with the low potential side power supply VSL as an input. The connection node of the p channel output buffer 121 and the n channel output buffer 122 is connected to a segment terminal 123. The output SD0 of the display timing control circuit 111 is input to the gates of the p channel output buffer 121 and the n channel output buffer 122. When the segment driver gate signal SD0 is pulled to a high level, the n channel output buffer 122 is turned on and VSL is output to the segment terminal 123. When the segment driver gate signal SD0 is pulled to a low level, the p channel output buffer 121 is turned on and VSH is output to the segment terminal 123.

As shown in Fig. 2, the common driver circuit used in the conventional liquid crystal display device includes a common power supply selector 130, a common driver control circuit 140 and a common driver 150. The common power supply selector 130 has a power supply switching timing control circuit 131, which is connected with switches a132, b133, c134 and d135. The switch a132 is connected with the ground potential GND, and switches b133, c134 and d135 are provided with power supplies VLC2, VLC1 and VLC0, respectively. The power supply switching timing control circuit 131 is provided with a clock signal to switch between the switches c134 and d135 to selectively output VLC0 or VLC1 as the high potential side power supply VCH. The circuit 131 switches between the switches a132 and b133 to selectively output VLC2 or GND as the low potential side power supply VCL.

The common driver control circuit 140 has a display timing control circuit 141 to which the frame signals 0 to 3 are input, and the display timing control circuit 141 outputs a common driver gate signal CD0.

The common driver 150 of a CMOS type has a p channel output buffer 151 and an n channel output buffer 152. The p channel output buffer 151 is provided with the high potential side power supply VCH as an input, and the n channel output buffer 152 is provided with the low potential side power supply VCL as an input. The connection node of the p channel output buffer 151 and the n channel output buffer 152 is connected to a common terminal 153. The output CD0 of the display timing control circuit 141 is input to the gates of the p channel output buffer 151 and the n channel output buffer 152. When the common driver gate signal CD0 is pulled to a high level, the n channel output buffer 152 is turned on and VCL is output to the common terminal 153. When the common driver gate signal CD0 is pulled to a low level, the p channel output buffer 151 is turned on and VHC is output to the common terminal 153.

In the conventional liquid crystal display device having the above described configuration, the power supply switching timing control circuit 101 in the segment driver circuit operates in response to a clock signal, and for example selects VLC1 for output as VSH while selects VLC2 for output as VSL as shown in Fig 3A. In a non-display state, only the clock signal is input to the display timing control circuit 111 in the segment driver control circuit 110. The display timing control circuit 111 outputs to the segment driver 120 a signal switched between high and low in synchronization with the clock signal as the segment driver gate signal SD0. Thus, as shown in Fig. 3A, a rectangular, segment waveform S0 is output to the segment terminal 123.

The power supply switching timing control circuit 131 in the common driver circuit operates in response to the clock signal and for example selects VLC1 for output as VCH, while selects VLC2 tor output as VCL as shown in Fig. 3B. In a non-display state, the display timing control circuit 141 in the common driver control circuit 140 is provided only with the clock signal. The display timing control circuit 141 outputs to the common driver 150 a signal switched between high and low in synchronization with the clock signal as the common driver gate signal CD0. Thus, a rectangular, common waveform C0 is output to the common terminal 153 as shown in Fig. 3B.

However, since the segment driver 120 is a CMOS type device, as the signal S0 output to the segment 123 has its output state transitioned in the rectangular waveform as shown in Fig. 3A, through current is generated in the p channel output buffer 121 and the n channel output buffer 122.

Similarly, the common driver 150 is also a CMOS type device, as the signal C0 output to the common terminal 153 has its output state transitioned in the rectangular waveform as shown in Fig. 3B, through current is generated in the p channel output buffer 151 and the n channel output buffer 152. This causes current loss and increases power consumption.

Furthermore, in the conventional liquid crystal display device (hereinafter as the LCD device), as shown in Figs. 3A and 3B, a rectangular wave in an intermediate potential level is output from the segment terminal 123 and the common terminal 153 in a non-display state, and current is thus wasted.

Meanwhile, in the conventional LCD device, a power supply control circuit which displays using a boosted power supply for LCD display can select whether to connect or disconnect the boosted power supply to/from the load. Therefore, the boosting circuit and the load are separated to reduce time required for boosting right after turning on the power supply and initialization. The load mainly refers to a segment terminal capacity and an LCD panel capacity. If a transition from a display state to a non-display state is controlled only with the power supply control circuit, disconnection of the power supply to the load is selected in the power supply control circuit to make a transition to a non-display state. If the boosting circuit is isolated from the load, the load is no longer supplied with power supply, and the potential immediately before the isolation from the power supply is maintained by the capacity of the load itself. Therefore, when the light is turned off, time should be necessary for charges charged at the load, i.e., the segment terminal or the common terminal to be discharged naturally, so that it takes relatively long for the LCD panel to be turned off.

In order to solve a part of the above-described problem, an LCD device operating with reduced power consumption has been suggested (Japanese Patent Laid-Open publication No. Hei. 2-210492, Japanese Patent Laid-Open publication No. Hei. 2-221998).

Japanese Patent Laid-Open publication No. Hei. 2-210492 discloses the LCD device having a plurality of bi-directional transfer gates provided in the power supply of a driving circuit for a liquid crystal display element and capable of interrupting a clock signal for the liquid crystal display element.

The LCD device makes the bi-directional transfer gates non-conductive with a stand-by control signal to bring the output of the entire output terminals for driving the LCD device element into a high impedance state, so that the driving clock signal can be stopped without degrading the characteristic of liquid crystal display element.

Japanese Patent Laid-Open publication No. Hei. 2-221998 discloses an LCD device in which two bi-directional transfer gate circuits are connected to the power supply source of the output buffer circuit which directly drives the liquid crystal display element, and the power supply for driving the liquid crystal and other power supplies may be switched by the control signal for the transfer gate circuit. The LCD device can output a particular voltage according to an operation state for a common electrode driving signal and a segment electrode signal to directly drive the liquid crystal display element.

According to Japanese Patent Laid-Open publication No. Hei. 2-210492, however, all the output terminals are in a high impedance state, and therefore the LCD device suffers from flickering when the LCD device is in a non-display state.

According to Japanese Patent Laid-Open publication No. Hei. 2-221998, if the LCD device is used in a dynamic system, and GND or a potential higher than GND is selected for the output of the transfer gate circuit, inverse bias is generated to increase current in the p channel of the output buffer circuit, and the VDD level cannot be selected as an n channel buffer source potential for each LCD terminal. This prevents the power consumption from being reduced.

Furthermore, Japanese Patent Laid-Open publication No. Sho. 59-002081, Japanese Patent Laid-Open publication No. Hei. 6-245172 and Japanese Patent Laid-Open publication No. Hei. 10-207429 disclose the techniques of reducing the power consumption of the display device, but the above-described disadvantages cannot be solved.

It is an object of the present invention to provide a liquid crystal display device capable of operating with reduced power consumption in a non-display state and with reduced transition time from a display state from a non-display state.

The liquid crystal display device according to the present invention includes a liquid crystal display panel, a common driver and a segment driver to drive each pixel in the liquid crystal display panel, a common driver control circuit and a segment driver control circuit to control the common driver and the segment driver, respectively based on a display timing, a boosting circuit to output power supplies in a plurality of potentials including a ground potential, a common power supply selector connected between the boosting circuit and the common driver to selectively supply two power supplies on high and low potential sides to the common driver, a segment power supply selector connected between the boosting circuit and the segment driver to selectively supply two power supplies on the high and low potential sides to the segment driver and an unit to input a non-display control signal to the common power supply selector, the common driver control circuit, the segment power supply selector and the segment driver control circuit and allow the common driver and the segment driver to output the ground potential when a pixel is in a non-display state.

According to the present invention, when the non-display control signal is input, the common driver and the segment driver to drive each pixel in the liquid crystal display panel output a ground potential, and therefore the ground potential is output to each pixel in a non-display state rather than a rectangular wave in an intermediate potential. Therefore, when the liquid crystal display panel is in a non-display state, the power consumption may be reduced.

Also according to the present invention, the ground potential can be applied to each pixel in the liquid crystal panel, charges accumulated in a capacity can be discharged by the ground potential when the liquid crystal panel changes its state from a display state to a non-display state, so that the charges can be quickly discharged. As a result, the time required for transition from the display state to the non-display state can be reduced, which can reduce the time required for turning off the light.

In this case, the common driver and the segment driver each have a MOS transistor of one conductivity type and a MOS transistor of the other conductivity type connected in series between an input terminal for the high potential side power supply and an input terminal for the low potential side power supply, and the outputs of the common driver control circuit and the segment driver control circuit are input to the gates of these transistors. The common power supply selector and the segment power supply selector output a ground potential as the low potential side power supply when the non-display control signal is input, so that the common driver control circuit and the segment driver control circuit turn on a transistor on the side to which the low potential side power supply is input among the transistors when the non-display control signal is input.

Thus, the common power supply selector and the segment power supply selector output the ground potential as the low potential side power supply when the non-display control signal is input. The common driver control circuit and the segment driver control circuit turn on a transistor on the side to which the low potential side power supply is input among the transistors. Therefore, through current passed through the MOS transistors of the one and the other conductivity types connected in series is eliminated, so that the power consumption can be reduced.

Preferably, the common driver control circuit and the segment driver control circuit have a display timing control circuit provided with a frame signal, and a logic circuit provided with the output of the display timing control circuit and the non-display control signal. When the non-display control signal is turned on, a signal to turn on a transistor on the side provided with the low potential side power supply among the transistors is output from the logic circuit.

Thus, the signal to turn on the transistor on the side supplied with the low potential side power supply among the transistors is output from the logic circuit, and therefore the ground potential can be output to each pixel in the liquid crystal display panel as the low potential side power supply from this transistor.

The nature, principle, and utility of the invention will become more apparent from the following detailed description when read in conjunction with the accompanying drawings in which like parts are designated by like reference numerals or characters.

In the accompanying drawings:
Fig. 1 is a block diagram of a segment driver in a conventional liquid crystal display device;
Fig. 2 is a block diagram of a common driver in the conventional liquid crystal display device;
Fig. 3A is a schematic waveform chart showing a segment waveform in a non-display state in the conventional liquid crystal display device in which the ordinate represents potential and the abscissa represents time;
Fig. 3B is a schematic waveform chart showing a common waveform in a non-display state in the conventional liquid crystal display device in which the ordinate represents potential and the abscissa represents time;
Fig. 4 is a block diagram of a liquid crystal display device according to an embodiment of the present invention;
Fig. 5 is a block diagram of a segment power supply selector, a segment driver control circuit and a segment driver in the liquid crystal display device according to the embodiment of the present invention;
Fig. 6 is a block diagram of a common power supply selector, a common driver control circuit and a common driver in the liquid crystal display device according to the embodiment of the present invention;
Fig. 7 is a timing chart showing the input and output waveforms of the segment driver control circuit and the segment driver according to the embodiment in which the ordinate represents potential and the abscissa represents time;
Fig. 8A is a timing chart showing the input and output waveforms of the segment driver according to the embodiment in which the ordinate represents potential and the abscissa represents time;
Fig. 8B is an enlarged view of a main part of Fig. 8A;
Fig. 9 is a timing chart showing the input and output waveforms of the common driver control circuit and the common driver according to the embodiment of the present invention in which the ordinate represents potential and the abscissa represents time;
Fig. 10A is a timing chart showing the input and output waveforms of the common driver according to the embodiment of the present invention in which the ordinate represents potential and the abscissa represents time; and
Fig. 10B is an enlarged view of a main part of Fig. 10A.

A liquid crystal display device according to an embodiment of the present invention will be now described in detail in conjunction with the accompanying drawings.

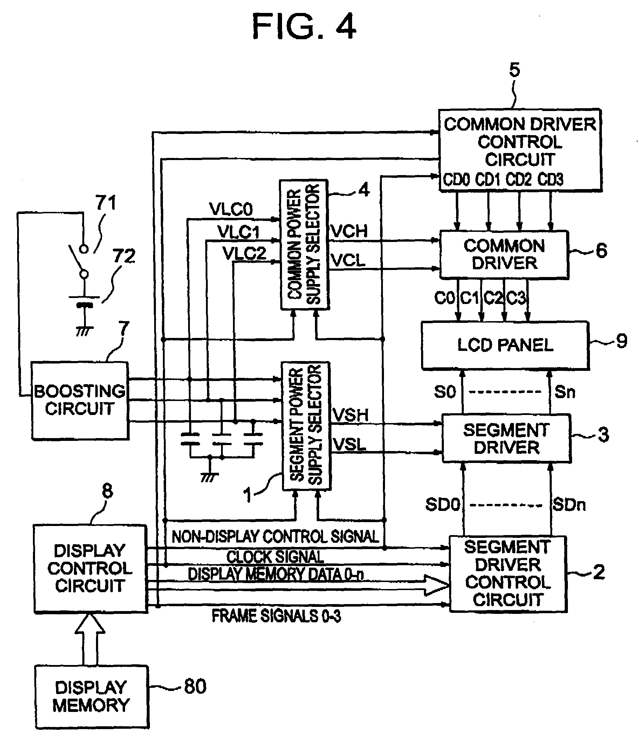

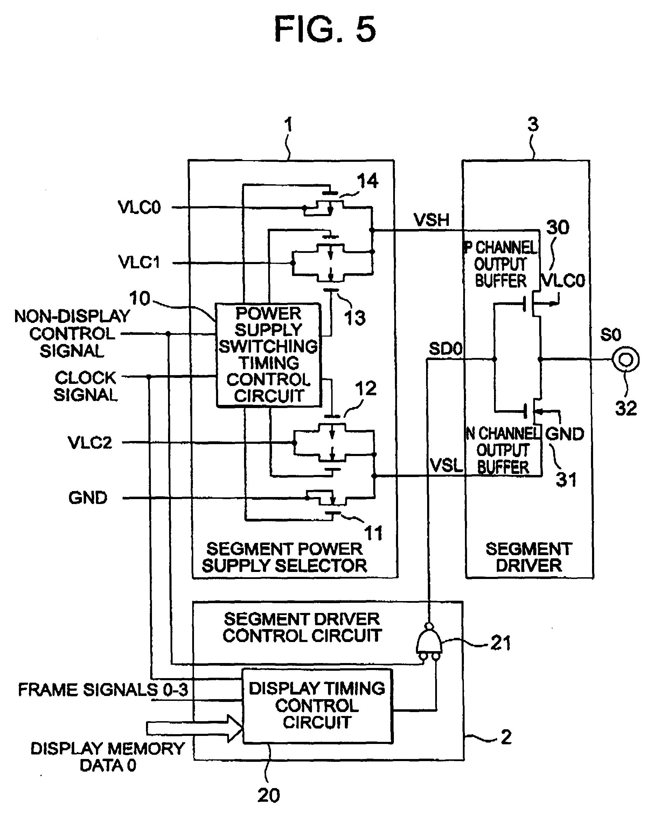

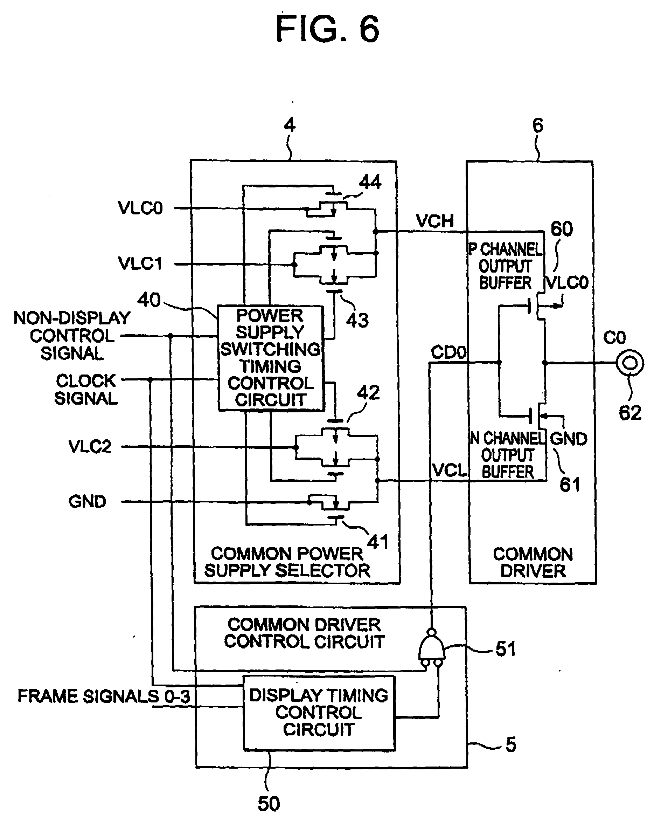

Fig. 4 is a block diagram of the liquid crystal display device according to the embodiment of the present invention. Fig. 5 is a block diagram of a segment power supply selector, a segment driver control circuit and a segment driver in the liquid crystal display device according to the embodiment. Fig. 6 is a block diagram of a common power supply selector, a common driver control circuit and a common driver in the liquid crystal display device according to the embodiment. Note that n sets of segment drivers 3 and segment driver control circuits 2 the same as those in Fig. 5 are generically shown in Fig. 4. Four sets of common drivers 6 and common driver control circuits 5 the same as those in Fig. 6 are generically shown in Fig. 4.

In the liquid crystal display device according to the embodiment, as shown in Fig. 4, a boosting circuit 7 connected to a power supply 72 through a switch 71 boosts the voltage of the power supply 72 and outputs three kinds of power supply voltages VLC0, VLC1 and VLC2. These power supply voltages VLC0 to VLC2 are input to a segment power supply selector 1 and a common power supply selector 4. The segment power supply selector 1 selects among these power supply voltages and a ground potential and outputs a high potential side power supply VSH and a low potential side power supply VSL to the segment driver 3. The common power supply selector 4 similarly selects among these power supply voltages and the ground potential and outputs a high potential side power supply VCH and a low potential side power supply VCL to the common driver 6. The segment driver 3 and the common driver 6 output their output signals S0 to Sn and C0 to C3 to a liquid crystal (LCD) panel 9, and a plurality of pixels in the LCD panel 9 are thus driven to display data.

A display control circuit 8 outputs a clock signal to the segment power supply selector 1 and the common power supply selector 4 as well as to the segment driver control circuit 2 and the common driver control circuit 5. A display memory 80 stores data in a display pattern (display memory data) to be displayed at the LCD panel 9. Note that display memory data 0 to n represent addresses in the display memory 80. The data in the display memory 80 is provided to the segment driver control circuit 2 through the display control circuit 8. The display control circuit 8 outputs a frame signal to the segment driver control circuit 2 and the common driver control circuit 5. According to the present embodiment, the display control circuit 8 outputs a non-display control signal when each pixel in the liquid crystal is in a non-display state. The non-display control signal is input to the segment driver control circuit 2, the segment power supply selector 1, the common driver control circuit 5 and the common power supply selector 4.

As shown in Fig. 5, the segment power supply selector 1 has a power supply switching timing control circuit 10 which is connected with switches a11, b12, c13 and c14 each formed of a transistor. The switches a11, b12, c13 and d14 are provided with a ground potential GND, power supplies VLC2, VLC1 and VLC0, respectively. The power supply switching timing control circuit 10 is provided with a clock signal to switch between switches c13 and d14 and selectively output VLC0 or VLC1 as the high potential side power supply VSH. Meanwhile, the circuit 10 switches between switches a11 and b12 to selectively output VLC2 or GND as the low potential side power supply VSL.

The segment driver control circuit 2 has a display timing control circuit 20 provided with frame signals 0 to 3 and the display memory data 0, and an OR circuit (logical sum circuit) 21 provided with the output of the display timing control circuit 20 and the non-display control signal. The OR circuit 21 takes the logical sum of the output of the display timing control circuit 20 and the non-display control signal, and outputs the result as a segment driver gate signal SD0 to the segment driver 3. Note that the same applies to segment driver gate signals SD1 to SDn.

The segment driver 3 is of a CMOS type and has a p channel output buffer 30 and an n channel output buffer 31. The high potential side power supply VSH is input to the p channel output buffer 30 while the low potential side power supply VSL is input to the n channel output buffer 31. The connection node of the p channel output buffer 30 and the n channel output buffer 31 is connected to a segment terminal 32. The gate electrode of each transistor in the p channel output buffer 30 and the n channel output buffer 31 is provided with the segment driver gate signal SD0 output from the OR circuit 21. When the segment driver gate signal SD0 is pulled to a high level, the n channel output buffer 31 is turned on and VSL is output to the segment terminal 32. Meanwhile, when the segment driver gate signal SD0 is pulled to a low level, the p channel output buffer 30 is turned on and VSH is output to the segment terminal 32. The same applies to the segment driver gate signals SD1 to SDn. The output of the segment driver 3 is applied to each pixel in the LCD panel 9.

As shown in Fig. 6, the common power supply selector 4 has a power supply switching timing control circuit 40, which is connected with switches a41, b42, c43 and d44 each formed of a transistor. The switches a41, b42, c43 and d44 are provided with the ground potential GND, power supplies VLC2, VLC1 and VLC0, respectively. The power supply switching timing control circuit 40 is provided with a clock signal to switch between the switches c43 and d44, and selectively outputs VLC0 or VLC1 as the high potential side power supply VCH. Meanwhile the circuit 40 switches between the switches a41 and b42 to selectively output VLC2 or GND as the low potential side power supply VCL.

The common driver control circuit 5 has a display timing control circuit 50 provided with the frame signals 0 to 3 and an OR circuit 51 provided with the output of the display timing control circuit 50 and a non-display control signal. The OR circuit 51 takes the logical sum of the output of the display timing control circuit 50 and the non-display control signal, and outputs the result as the common driver gate signal CD0 to the common driver 6. Note that the same applies to the common driver gate signals CD1 to CD3.

The common driver 6 is of a CMOS type and has a p channel output buffer 60 and an n channel output buffer 61. The p channel output buffer 60 is provided with the high potential side power supply VCH, while the n channel output buffer 61 is provided with the low potential side power supply VCL. The connection node of the p channel output buffer 60 and the n channel output buffer 61 is connected to a common terminal 62. The gate electrode of each transistor in the p channel output buffer 60 and the n channel output buffer 61 is provided with the common driver gate signal CD0 output from the OR circuit 51. When the common driver gate signal CD0 is pulled to a high level, the n channel output buffer 61 is turned on and VCL is output to the common terminal 62. Meanwhile, when the common driver gate signal CD0 is pulled to a low level, the p channel output buffer 60 is turned on, and VCH is output to the common terminal 62. The same applies to the common driver gate signals CD1 to CD3. The output of the common driver 6 is provided to each pixel in the LCD panel 9.

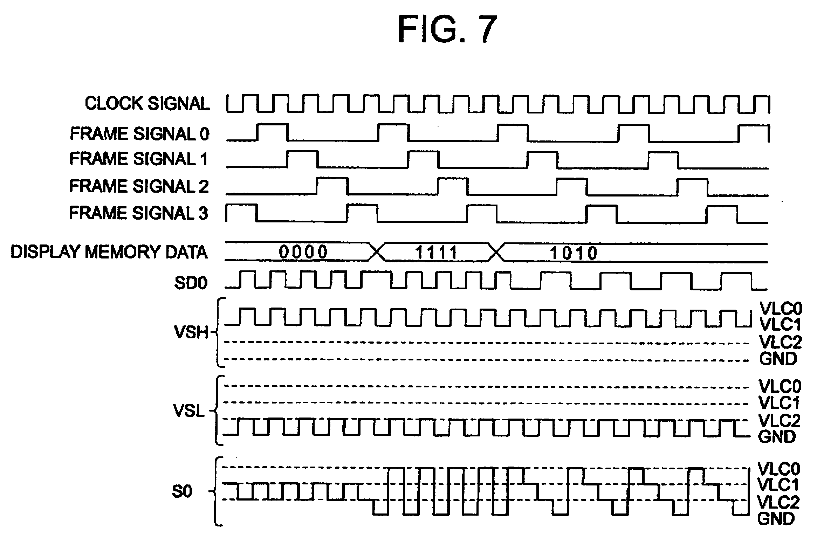

The operation of the liquid crystal display device according to the present embodiment will be now described in conjunction with Figs. 7 to 10B as well as Figs. 4 to 6.

Fig. 7 is a timing chart showing the input and output waveforms of the segment driver control circuit 2 and the segment driver 3 according to the present embodiment, in which the ordinate represents potential and the abscissa represents time.

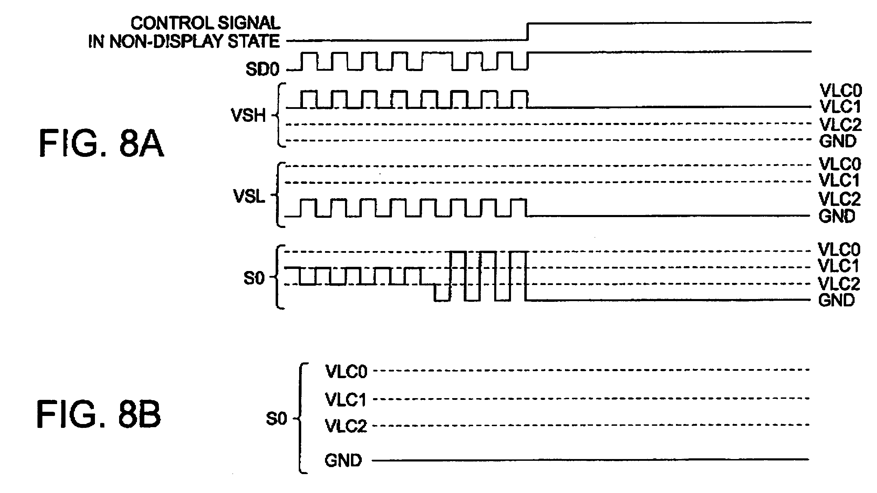

Fig. 8A is a timing chart showing the input and output waveforms of the segment driver 3 according to the present embodiment, in which the ordinate represents potential and the abscissa represents time. Fig. 8B is an enlarged view showing a main part of Fig. 8A.

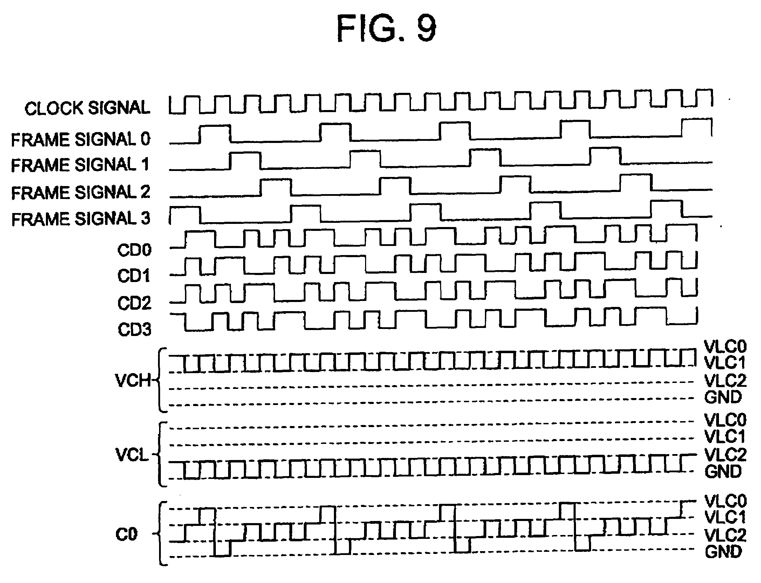

Fig. 9 is a timing chart showing the input and output waveforms of the common driver control circuit 5 and the common driver 6 according to the present embodiment, in which the ordinate represents potential and the abscissa represents time.

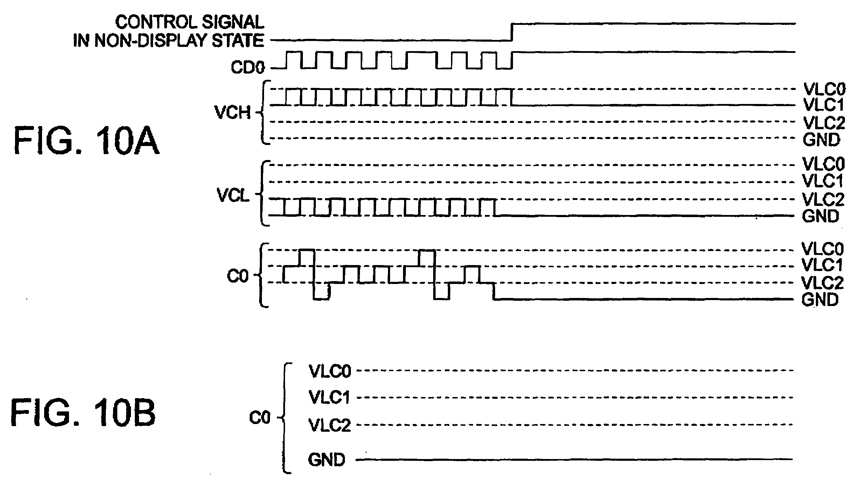

Fig. 10A is a timing chart showing the output waveform of the common driver 6 according to the present embodiment, in which the ordinate represents potential and the abscissa represents time.

Fig. 10B is an enlarged view showing a main part of Fig. 10A.

The operation in a display state will be now described. As shown in the first half of the Figs. 8A and 10A, when the non-display control signal is off (in a low level), a display is made in a normal display state.

More specifically, the display control circuit 8 generates the clock signal and the frame signals 0 to 3 as shown in Fig. 7. Data represented by display memory data 0 in Fig. 7 is set for display memory data 0 in Fig. 4 so that a desired display is enabled on the LCD panel 9 by the output of the segment terminal 32. The value of the display memory data 0 is input to the display timing control circuit 20 in the segment driver control circuit 2 via the display control circuit 8. The display timing control circuit 20 in the segment driver control circuit 2 generates a segment driver gate signal from the frame signals 0 to 3 and the display memory data 0 similarly to the conventional device.

The OR circuit 21 is provided with a low level signal as a non-display control signal. When the logical sum of the output of the display timing control circuit 20 and the non-display control signal is taken, the output of the display timing control circuit 20 is output as is as the segment driver gate signal SD0. The signal SD0 is input to the gate electrodes of the p channel output buffer 30 and the n channel output buffer 31 in the segment driver 3.

The power supply switching timing control circuit 10 in the segment power supply selector 1 receives as inputs the non-display control signal and the clock signal, and alternately turns on/off the switches c13 and d14 in synchronization with the clock signal to alternately output VLC0 and VLC1 as the high potential side power supply VSH. The power supply switching timing control circuit 10 also alternately turns on/off the switches a11 and b12 in synchronization with the clock signal to alternately output VLC2 and GND as the low potential side power supply VSL. When the segment driver gate signal SD0 is high, the n channel output buffer 31 is turned on and the potential of the VSL (VLC2 or GND) is output to the segment terminal 32 as the segment driver output S0. When the segment driver gate signal SD0 is low, the p channel output buffer 30 is turned on and the potential of VSH (VLC0 or VLC1) is output to the segment terminal 32 as the segment driver output S0. Thus, a signal in the waveform of S0 as shown in Fig. 7 is output to the segment terminal 32. The segment driver outputs S1 to Sn are similarly output from the segment driver 3.

The operation of the common driver 6 in a display state will be now described. As shown in Fig. 9, when the clock signal and the frame signals 0 to 3 are input to the display timing control circuit 50, the display timing control circuit 50 generates the common driver gate signals CD0 to CD3. Since the non-display control signal is low in a display state, the output of the display timing control circuit 50 as is is output from the common driver control circuit 5 as the common driver gate signals CD0 to CD3. The power supply switching timing control circuit 40 switches between the switches d44 and c43 in synchronization with the clock signal to alternately output VLC0 and VLC1 as the high potential side power supply VCH while alternately output VLC2 and GND as the low potential side power Supply VCL. In the common driver 6, when the common driver gate signal CD0 is high, the n channel output buffer 61 is turned on and VCL is selected. The potential of VCL at the time is output to the common terminal 62 as the common driver output C0. Meanwhile, when the common driver gate signal CD0 is low, the p channel output buffer 60 is turned on and VCH is selected. The potential of VCH at the time is output to the common terminal 62 as the common driver output C0. Thus, a signal in the waveform C0 in Fig. 9 is output to the common terminal 62. The common driver outputs C1 to C3 are similarly output from the common driver 6.

The operation of the segment driver 3 in a non-display state will be now described in conjunction with Fig. 8A and 8B. When the liquid crystal is in a non-display state, the display control circuit 8 turns on the non-display control signal (pulls the signal to a high level).

As shown in Fig. 8A, when the non-display control signal is on (in a high level), a high level signal is output from the OR circuit 21 regardless of the kind of the signal output from the display timing control circuit 20, so that the n channel output buffer 31 is turned on. The power supply switching timing control circuit 10 turns on the switches a11 and c13 when the non-display control signal is in a high level, so that VSH is fixed to VLC1, and VSL is fixed to GND as the output of the segment power supply selector 1. Since the segment driver 3 is provided with the segment gate signal SD0 and the n channel output buffer 31 is turned on, VSL is selected and the GND level is output to the segment terminal 32.

The operation of the common driver 6 in a non-display state will be now described in conjunction with Figs. 10A and 10B.

When the non-display control signal is in a high level, as shown in Fig. 10A, a high level signal is output as the common driver gate signal CD0 from the OR circuit 51 regardless of the output of the display timing control circuit 50, so that the n channel output buffer 61 is turned on. When the non-display control signal is in a high level, the power supply switching timing control circuit 40 turns on the switches a41 and c43, and VCH is fixed to VLC1 and VCL is fixed to GND as the output of the common power supply selector 4. Since the n channel output buffer 61 is on, as shown in Fig. 10B, the non-display control signal is pulled to a high level and the GND level is output to the common terminal 62 at the same time.

As described above, according to the present embodiment, the OR circuit 21 is provided in the output stage of the segment driver control circuit 2, and when the non-display control signal is on, a high level signal is output from the segment driver control circuit 2 as the segment driver gate signal SD0 to select the n channel output buffer 31. When the non-display control signal is on, the power supply switching timing control circuit 10 selects GND as the low potential side power supply VSL, and therefore GND is output to the segment terminal 32 and to the LCD panel 9.

Similarly, GND is output to the common terminal 62 and to the LCD panel 9. Therefore, when the non-display control signal is on, the segment driver gate signals SD0 to SDn and the common driver gate signals CD0 to CD3 are pulled to a high level, and the segment driver outputs S0 to Sn and the common driver outputs C0 to C3 are all pulled to GND. More specifically, in a non-display state, the outputs of the segment terminal 32 and the common terminal 62 are not a rectangular wave in an intermediate potential, but in a GND level. Thus, GND can be output from the segment driver 3 and the common driver 6 to each pixel in the LCD panel 9, so that through current in the segment driver 3 and the common driver 6 can be eliminated when the LCD panel 9 in a non-display state.

Also according to the present embodiment, the segment power supply selector 1 and the common power supply selector 4 connect the power supply voltage VLC0, VLC1 or VLC2 supplied from the boosting circuit 7 or the ground potential GND to the load. When the LCD panel 9 changes its state from a display state to a non-display state, the non-display control signal may be turned on to connect GND to VSL and VCL in the segment power supply selector 1 and the common power supply selector 4. Further, in the segment driver control circuit 2 and the common driver control circuit 5, the power supply switching timing control circuits 10 and 40 are controlled by the non-display control signal such that VSL and VCL are selected by the segment driver 3 and the common driver 6. Therefore, the charges accumulated at the segment terminal 32 and the common terminal 62 may be discharged by the ground potential and therefore charges can be discharged quickly. Therefore, the LCD panel 9 can be quickly turned off.

Note that the present invention is not limited to the above-described embodiment, and in the segment control circuit 2 shown in Fig. 5, the OR circuit 21 may not be provided. In this case, when the non-display control signal is on, the display timing control circuit 20 outputs frame signals 0 to 3, the clock signal and the display memory data 0 while selecting the non-display control signal. Thus, when the non-display control signal is in a high level, the SD0 may be pulled to a high level and the segment driver output S0 may be pulled to the GND output as described above. Therefore, the power consumption in a non-display state caused by through current in the segment driver 3 can be reduced. Also in the common driver control circuit 5, the OR circuit 51 may not be provided similarly to the segment driver control circuit 2.

In the segment driver 3 as shown in Fig. 5, two transfer gates may be provided instead of the p channel output buffer 30 and the n channel output butter 31 forming the CMOS type device. Each of the transfer gates has a p channel transistor and an n channel transistor, wherein a source electrode of the p channel transistor is connected to a source electrode of the n channel transistor and a drain electrode of the p channel transistor is connected to a drain electrode of the n channel transistor. VSH is input to the source electrodes of the p channel transistor and the n channel transistor of one of the transfer gate. VSL is input to the source electrodes of the p channel transistor and the n channel transistor of the other transfer gate. SD0 is input to both of gate electrodes of the p channel transistors of the one of the transfer gate and the n channel transistors of the other transfer gate. An inverse signal of SD0 is input to both of the gate electrodes of the n channel transistors of one of the transfer gate and the p channel transistors of the other transfer gate. The drain electrodes of the p channel transistor and the n channel transistor of both of the transfer gates are connected to the segment terminal 32. Thus, VSH is output as S0 from the segment terminal 32 when SD0 is in low level. VSL is output as S0 from the segment terminal 32 when SD0 is in high level. In this case, in the segment power supply selector 1, when the non-display control signal is on, GND is output as VSL, the segment driver gate signal SD0 is pulled to a high level and the segment driver output S0 may be pulled to the GND output as described above so that the power consumption in a non-display state caused by through current in the segment driver 3 can be reduced.

Also the same modification to the common driver 6 as that to the segment driver 3 described above can be applied. As a result, when the non-display control signal is on, GND may be output as VCL, the common driver gate signal CD0 may be pulled to a high level and the segment driver output C0 may be pulled to the GND output as described above, so that the power consumption in a non-display state caused by through current can be reduced in the common driver 6.

While there has been described what are at present considered to be preferred embodiments of the invention, it will be understood that various modifications may be made thereto, and it is intended that the appended claims cover all such modifications as fall within the true spirit and scope of the invention.

## Claims

1. A liquid crystal display device, comprising:
a liquid crystal display panel (9);
a common driver (6) and a segment driver (3) to drive each pixel in the liquid crystal display panel (9);
a common driver control circuit (5) and a segment driver control circuit (2) to control said common driver (6) and segment driver (3), respectively based on a display timing;
a boosting circuit (7) to output power supplies in a plurality of potentials including a ground potential;
a common power supply selector (4) connected between said boosting circuit (7) and said common driver (6) to selectively supply two power supplies on high and low potential sides to said common driver (6); and
a segment power supply selector (1) connected between said boosting circuit (7) and said segment driver (3) to selectively supply two power supplies on the high and low potential sides to the segment driver (3);
characterized by further comprising:
an unit to input a non-display control signal to said common power supply selector (4), said common driver control circuit (5), said segment power supply selector (1) and said segment driver control circuit (2) and allow said common driver (6) and said segment driver (3) to output the ground potential when a pixel is in a non-display state.

2. The liquid crystal display device according to claim 1, characterized in that
said common driver (6) and said segment driver (3) each comprise a MOS transistor of one conductivity type (30,60) and a MOS transistor of the other conductivity type (31,61) connected in series between an input terminal for said high potential side power supply and an input terminal for said low potential side power supply,
the outputs of said common driver control circuit (5) and segment driver control circuit (2) are input to the gates of these transistors (30,31,60 and 61),
said common power supply selector (4) and said segment power supply selector (1) output the ground potential as said low potential side power supply when said non-display control signal is input, and
said common driver control circuit (5) and said segment driver control circuit (2) turn on a transistor on the side to which the low potential side power supply is input among said transistors when said non-display control signal is input.

3. The liquid crystal display device, according to claim 2, characterized in that
said common driver control circuit (5) and said segment driver control circuit (2) each comprising;
a display timing control circuit (50,20) to which a frame signal is input, and
a logic circuit (51,21) to which the output of the display timing control circuit and said non-display control signal are input, wherein when said non-display control signal is on, a signal to turn on a transistor on the side to which the low potential side power supply is input among said transistors is output.

4. The liquid crystal display device according to claim 3, characterized in that
the non-display control signal is a signal pulled to a high level in an on state, and said logic circuit (51,21) takes a logical sum.

5. The liquid crystal display device according to claim 3, characterized in that
said display tinting control circuit (20) in the segment driver control circuit (2) is provided with display memory data to be displayed on said liquid crystal display panel as an input.

6. The liquid crystal display device according to claim 2, characterized in that
the one conductivity type is n type and the other conductivity type is p type.
